# FASCICULE DE BREVET EUROPEEN

(11) **EP 2 459 400 B1**
(45) Date de publication et mention de la délivrance du brevet: **05.06.2013**
(21) Numéro de dépôt: 10742457.4
(22) Date de dépôt: 30.07.2010
(51) Int. Cl.: B60C 19/12, B29C 73/16

(54) **BANDAGE PNEUMATIQUE AVEC COUCHE AUTO-OBTURANTE INTEGREE**
LUFTREIFEN MIT INTEGRIERTER SELBSTVERSCHLIESSENDER LAGE
PNEUMATIC TYRE WITH BUILT-IN SELF-SEALING PLY

(30) Priorité: 31.07.2009 FR 0955402; 07.09.2009 FR 0956072
(43) Date de publication de la demande: 06.06.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: CUSTODERO, Emmanuel, F-63400 Chamalieres (FR); RIGO, Sébastien, F-63410 Manzat (FR); THUILLIEZ, Julien, F-63670 La Roche Blanche (FR)
(74) Mandataire: Dequire, Philippe Jean-Marie Denis
(86) Numéro de dépôt international: PCT/EP2010/061114
(87) Numéro de publication internationale: WO 2011/012699

(56) Documents cités:
- US-A- 4 910 085
- US-A1- 2009 084 482

## Description

### Domaine de l'invention

La présente invention concerne les bandages pneumatiques comportant une couche auto-obturante (« *self sealing* ») disposée sur leur paroi intérieure pour obturer d'éventuelles perforations en service et plus particulièrement de tels bandages pneumatiques dans lesquels la couche auto-obturante est placée dans l'ébauche du bandage pneumatique avant sa vulcanisation.

### Arrière plan technologique

De nombreux documents présentent de tels bandages pneumatiques comportant une couche auto-obturante sur tout ou partie de leur surface intérieure.

A titre d'exemple, le document US 4 418 093 présente un procédé pour disposer de façon régulière une couche de matériau auto-obturant sur la paroi intérieure d'un bandage pneumatique vulcanisé par combinaison d'une mise en rotation du bandage pneumatique suivie de mouvements d'oscillations jusqu'à ce que le matériau auto-obturant soit suffisamment réticulé pour ne plus fluer.

Lorsque la couche auto-obturante est disposée dans l'ébauche à cru d'un bandage pneumatique, l'un des problèmes rencontrés est dû à la nature très collante de la couche auto-obturante qui adhère fortement à la membrane de cuisson pendant la phase de vulcanisation. Après la sortie du bandage pneumatique vulcanisé du moule de cuisson, des parties de la couche auto-obturante peuvent rester collées sur la paroi de la membrane et entraîner sa mise au rebut rapide. Pendant cette phase de vulcanisation à haute température, des constituants de la couche auto-obturante peuvent aussi migrer dans la membrane de cuisson ce qui peut également en diminuer la durée de vie. Les agents anti-collants usuellement utilisés tels que les badigeons ou les liquides siliconés sont tout à fait insuffisants pour résoudre ce problème.

Pour résoudre ce problème, le document US 2009/0084482 A1 divulgue un bandage pneumatique avec couche auto-obturante incorporée lors de la fabrication du pneumatique. Ce bandage pneumatique comporte une bande de roulement caoutchouteuse extérieure, un renfort de carcasse, une couche étanche aux gaz disposée intérieurement relativement au renfort de carcasse et une couche de protection disposée le plus intérieurement. Il comporte aussi une couche auto-obturante adjacente à la couche de protection séparable et disposée intérieurement relativement à la couche étanche aux gaz. La couche de protection est un film thermoplastique de nylon ou d'un mélange de nylon et de caoutchouc.

La couche de protection facilite la fabrication du bandage pneumatique en évitant tout contact entre la couche auto-obturante et les outils d'assemblage de l'ébauche du bandage pneumatique. Cette couche est aussi dite séparable, c'est-à-dire qu'elle peut être retirée de la surface de la couche auto-obturante après la vulcanisation du pneumatique sans emporter tout ou partie de celle-ci et sans se déchirer.

### Description de l'invention

L'invention a pour objet un bandage pneumatique similaire à celui précédemment décrit dans lequel la couche de protection est constituée par un film thermoplastique comportant, à tire de polymère majoritaire, un copolymère à blocs rigides et à blocs souples répondant à la formule :

-(BR-BS)ₙ-

où :
- BR représente un bloc rigide composé d'un polyamide ou d'un mélange de polyamides, noté PA ;
- BS représente un bloc souple composé d'un polyéther, d'un mélange de polyéthers ou d'un copolymère polyéther-polyester, noté PE ; et
- n représente le nombre d'unités (BR-BS) dudit copolymère à blocs.

Comme décrit précédemment, un tel film thermoplastique permet de réaliser la confection du bandage pneumatique en supprimant tous les problèmes liés au collant intrinsèquement très fort des couches auto-obturantes. Le film de protection sert de séparation entre la couche auto-obturante d'une part et le tambour d'assemblage puis la membrane de cuisson d'autre part.

Selon un mode de réalisation de l'invention, le copolymère à blocs rigides et à blocs souples est tel que la masse moléculaire moyenne en nombre du bloc rigide BR est comprise entre 200 et 12 000 g/mol, préférentiellement entre 400 et 8 000 g/mol et encore plus préférentiellement entre 800 et 6 000 g/mol.

Selon un mode de réalisation de l'invention, le copolymère à blocs rigides et à blocs souples est tel que la masse moléculaire moyenne en nombre du bloc souple BS est comprise entre 100 et 8 000 g/mol, plus préférentiellement entre 200 et 6000 g/mol et encore plus préférentiellement entre 500 et 4 000 g/moL

Selon un mode de réalisation de l'invention, le copolymère à blocs rigides et à blocs souples est tel que sa masse moléculaire moyenne en nombre est comprise entre 600 et 20 000 g/mol, préférentiellement entre 800 et 14 000 g/mol et encore plus préférentiellement entre 1000 et 10 000 g/mol.

Ces choix de masses moléculaire des segments « durs » et « souples » et des pourcentages respectifs permettent d'obtenir des films de température de ramollissement élevée et suffisamment déformables de façon à être compatibles avec leur utilisation comme film de protection d'une couche auto obturante en bandage pneumatique.

Les copolymères à blocs rigides et à blocs souples -(BR-BS)ₙ- sont des élastomères thermoplastiques où les blocs rigides BR cristallins ou semi-cristallins forment des zones dures qui empêchent le fluage des zones de blocs souples BS.

Les blocs rigides BR peuvent être constitués :
a) d'une structure homopolyamide issue de la polymérisation (i) d'un lactame, en particulier un lactame en C4-C12, (ii) d'un amino-acide, en particulier d'un amino-acide en C4-C12, (iii) d'un couple (acide dicarboxylique.diamine) qui est un produit de condensation d'un acide dicarboxylique aliphatique ou aromatique, linéaire ou ramifié en C2-C40 et d'une diamine aliphatique linéaire ou ramifiée, cyclique, aromatique ou semi-aromatique, ou
b) d'une structure copolyamide issue de la polymérisation d'un mélange d'au moins deux constituants parmi (i), (ii) ou (iii).

A titre de lactame, on peut citer le caprolactame, l'oenantholactame ou le laurylactame.

A titre d'amino-acide, on peut citer les acides amino-caproïques, amino-7-heptanoïque, amino-11-undécanoïque et amino-12-dodécanoïque.

A titre de diacides carboxyliques aliphatiques, on peut citer les acides butanedioïque, succinique, adipique, azélaïque, subérique, sébacique, pimélique, 1,10-décanedioique, 1,11-undécanedioique, 1,12-dodécanedioique, 1,18-octadécanedioique.

A titre de diacides aromatiques, on peut citer les acides phtaliques, isophtaliques ou terephtaliques.

A titre de diamine on peut citer la 1,4-tétraméthylène diamine, la 1,6-hexaméthylène diamine, la 1-9-nonaméthylène diamine, la 1-12-dodécaméthylène diamine, la triméthylhexaméthylène diamine, les isomères de 2,2-bis-(3-méthyl-4-aminocyclohexyl-)propane, les isomères de bis(3-méthyl-4-aminocyclohexyl)méthane, le para-amino-cyclohexylméthane, les isomères de bis(4-aminocyclohexyl)-méthane, le para-amino-dicyclohexylméthane, le 2,2-bis(3-méthyl-4-aminocyclohexyl)propane, le 2,6-bis(aminométhyl)norbornane, l'isophorone diamine, la m-xylène diamine et la pipérazine.

Selon un mode préférentiel de réalisation de l'invention, les blocs rigides BR sont choisis dans le groupe des polyamide PA 6, PA 11, PA 12, PA 4-6, PA 6-6, PA 6-10, PA 6-11, PA 6-12, PA 11-12 et leurs mélanges. Très préférentiellement, les blocs rigides BR sont choisis dans le groupe des polyamide 6, polyamide 6-6, polyamide 11, polyamide 12 et leurs mélanges. Optionnellement, les blocs rigides comportent également des unités aromatiques issues d'un diacide carboxylique ou d'une diamine utilisés lors de la synthèse du bloc rigide.

Au cours de la synthèse du bloc BR à base de polyamide, un agent de contrôle de masses moléculaires peut être introduit dans le milieu de polymérisation. Il peut s'agir d'un composé de type polyol ou polyacide.

Au cours de la synthèse du bloc BR à base de polyamide, un catalyseur de condensation peut être introduit dans le milieu de polymérisation.

Les blocs souples BS peuvent être constitués :
a) de polyalkylènes éther polyols, notamment des polyalkylènes éther diol. Les blocs sont choisis parmi le polyéthylène éther glycol (PEG), le polypropylène éther glycol (PPG), le polytétraméthylène éther glycol (PTMG), le polyhexaméthylène éther glycol, le polytriméthylèneéther glycol (PO3G), le poly(tétrahydrofuranne) (polyTHF), le poly(3-alkyl tétrahydrofuranne) en particulier le poly(3-méthyl tétrahydrofuranne) (poly(3MeTHF) et leur copolymère à blocs ou statistiques. On peut également envisager un bloc PE de type copolyéther contenant un enchaînement d'au moins deux blocs PE cités ci-dessus ;
b) de copolymères polyéther-polyester, préparés par polycondensation d'un bloc polyéther cité ci-dessus avec un bloc polyester. Dans ce cas, chacun des blocs polyéther et polyester possèdent deux fonctions à chacune des extrémités de chaîne de manière à permettre la réaction de condensation. Ces fonctions sont choisies par l'homme de l'art parmi les couples (acide, alcool), (acide, amine), (isocyanate, alcool), (isocyanate-amine), etc...

Les extrémités de chaînes des blocs BS (ou PE) peuvent être diOH, diNH2, diisocyanate ou diacide selon leur procédé de synthèse.

Selon un mode préférentiel de réalisation de l'invention, les blocs souples sont choisis parmi le PEG, PPG, PTMG ou poly(3-MeTHF). Optionnellement, les blocs rigides comportent également des unités aromatiques issus d'un diacide carboxylique ou d'une diamine.

Les blocs BR peuvent être à extrémités acides carboxyliques, on parle alors de PA diacide carboxylique ou peuvent être à extrémités amine, on parle alors de PA diamines. Les blocs BS peuvent être à extrémités alcool, amine, isocyanate ou acides carboxyliques suivant leur procédé de synthèse. On parle alors de PE dialcool ou polyalcool, diamine, di-isocyanate ou diacides.

Les liaisons chimiques entre les blocs BR et BS s'effectuent par réaction des extrémités de chaînes du bloc BR avec les extrémités de chaînes du bloc BS. Il s'agit ainsi de réactions de polycondensation, pouvant conduire à la formation de liaisons ester ou amide, ou de réactions pouvant conduire à la formation de liaisons carbamate, uréthanne ou urée. La nature des extrémités de chaînes des blocs BR et BS est choisie par l'homme de l'art afin de préparer le copolymère à blocs -(BR-BS)ₙ possédant les propriétés thermiques et mécaniques satisfaisantes pour l'application visée, c'est-à-dire permettant d'obtenir des films de température de ramollissement élevée et suffisamment déformables de façon à être compatibles avec leur utilisation comme film de protection d'une couche auto obturante en bandage pneumatique.

La nature des extrémités de chaînes dépend des conditions de synthèses des blocs BR et BS utilisées, notamment la nature de l'amorceur de la polymérisation ou alors la nature de l'agent de contrôle de longueur de chaîne lors de la réaction de polycondensation et/ou de polymérisation.

A titre de simplification d'écriture, le copolymère à blocs rigides et à blocs souples -(BR-BS)ₙ- sera noté PEBA dans la suite de la description de l'invention.

En plus du PEBA qui constitue le polymère majoritaire de la composition du film de protection, il est possible d'adjoindre à titre minoritaire un ou plusieurs autres polymères, notamment élastomère diénique saturé et insaturé, thermoplastique élastomère (TPE, TPS), thermoplastique (notamment polyesters et polyamides) ; des agents d'extension comme des polymères de faible masse ou des huiles peuvent également être utilisées. A titre d'additif peuvent enfin être ajoutés des charges, des agents de protection ou de mise en oeuvre couramment utilisés dans la formulation des PEBA.

Les thermoplastiques élastomères peuvent notamment être choisis parmi les élastomères thermoplastiques styréniques (TPS) tels les SBS et le SEBS, les polypropylènes à phase EPDM vulcanisé dynamiquement tels les PP/EPDM-VD, les élastomères thermoplastiques à base oléfinique et phase élastomère vulcanisé dynamiquement tels les PP/NR-VD, les élastomères thermoplastiques à base oléfinique et phase élastomère non vulcanisé tels les TPO, les polypropylènes à phase NBR vulcanisé dynamiquement tels les PP/NBR-VD, les polypropylènes à phase caoutchouc bromobutyl vulcanisé dynamiquement tels les PP/IIR-VD, les alliages polychlorure de vinylidène à phase EVA réticulé tels les EVA/VC, les élastomères thermoplastiques polyuréthannes ou TPU, les copolyesters ou COPE, les élastomères thermoplastiques à base PVC tels les TPE/PVC, et leurs mélanges.

Ces formulations de films doivent néanmoins présenter, de façon à pouvoir être utilisables comme films de protection, les caractéristiques suivantes :
■ une contrainte rapportée à la section initiale en extension uniaxiale à 100 % de déformation et température ambiante du film inférieure à 20 MPa ; pour des épaisseurs de l'ordre de 5 à 50 micromètres et de préférence de 7 à 30 micromètres, ces films sont aisément étirables à température ambiante et ainsi ne perturbent pas les étapes de conformation et de mise en place dans le moule de cuisson du bandage pneumatique ;
■ un allongement rupture supérieur à 150 % en extension uniaxiale et de préférence supérieur à 300 % à température ambiante ; le film peut supporter l'ensemble des sollicitations lors de la fabrication du bandage pneumatique sans se déchirer ou se rompre ;
■ une température d'utilisation supérieure à 170°C et de préférence comprise entre 180 °C et 260 °C ; cette gamme de température est au-delà des températures maximales atteintes par des films en contact avec la membrane de cuisson et garantit l'intégrité physique du film pendant cette phase de vulcanisation.

L'homme de l'art saura ajuster la composition du film de protection de façon à atteindre les niveaux de propriété requis.

Selon un mode de réalisation préférentiel, le PEBA est le seul constituant polymère du film thermoplastique de protection.

L'un des avantages de ce mode de réalisation est que le PEBA peut être utilisé sans agent d'extension, cela limite les risques de migration de composants pendant la phase de vulcanisation.

Selon un mode de réalisation de l'invention, la couche auto-obturante peut comporter au moins (pce signifiant parties en poids pour cent parties d'élastomère solide) un élastomère thermoplastique styrénique (dit « TPS ») et plus de 200 pce d'une huile d'extension dudit élastomère.

Le TPS peut être l'élastomère majoritaire de la couche auto-obturante.

L'élastomère TPS peut être choisi dans le groupe constitué par les copolymères blocs styrène/ butadiène/ styrène (SBS), styrène/ isoprène/ styrène (SIS), styrène/isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/styrène (SEEPS) et les mélanges de ces copolymères.

Avantageusement, l'élastomère TPS est choisi dans le groupe constitué par les copolymères SEBS, les copolymères SEPS et les mélanges de ces copolymères.

Selon un autre mode de réalisation, la couche auto-obturante peut comporter au moins (pce signifiant parties en poids pour cent parties d'élastomère solide) :
(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 30 pce d'une charge.

L'élastomère diénique insaturé est avantageusement choisi dans le groupe constitué par les polybutadiènes, le caoutchouc naturel, les polyisoprènes de synthèse, les copolymères de butadiène, les copolymères d'isoprène et les mélanges de tels élastomères.

L'élastomère diénique insaturé peut avantageusement être un élastomère isoprénique, de préférence choisi dans le groupe constitué par le caoutchouc naturel, les polyisoprènes de synthèse et les mélanges de tels élastomères.

Avantageusement, le taux d'élastomère diénique insaturé est supérieur à 50 pce, de préférence supérieur à 70 pce.

### Description brève des dessins

Tous les détails de réalisation sont donnés dans la description qui suit, complétée par les figures 1 à 3, dans lesquelles :
- la figure 1 représente de manière très schématique (sans respect d'une échelle spécifique), une coupe radiale d'un bandage pneumatique conforme à un mode de réalisation de l'invention ;
- la figure 2 présente en coupe radiale partielle d'une ébauche de pneumatique conforme à un mode de réalisation de l'invention ; et
- la figure 3 présente un schéma d'extrudeur-mélangeur à vis.

### Description détaillée de modes de réalisation de l'invention

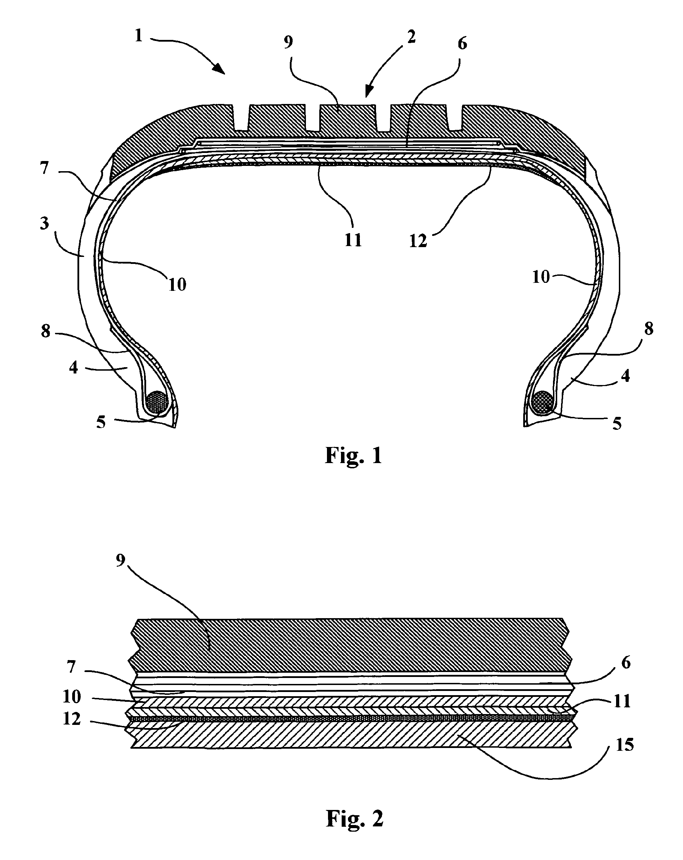

La figure 1 représente de manière schématique une coupe radiale d'un bandage pneumatique ou pneumatique incorporant une couche auto-obturante avec une couche de protection selon un mode de réalisation de l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. L'armature de sommet 6 est surmontée radialement extérieurement d'une bande de roulement caoutchouteuse 9. Une armature de carcasse 7 est enroulée autour des deux tringles 5 dans chaque bourrelet 4, le retournement 8 de cette armature 7 étant par exemple disposé vers l'extérieur du pneumatique 1. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Une couche étanche 10 s'étend d'un bourrelet à l'autre radialement intérieurement relativement à l'armature de carcasse 7.

Le pneumatique 1 est tel que sa paroi interne comporte une couche auto-obturante 11. Conformément à un mode de réalisation préférentiel de l'invention, la couche auto-obturante 11 recouvre la couche étanche 10 dans la zone du sommet 2 du bandage pneumatique. La couche auto-obturante peut aussi se prolonger de la zone sommet jusqu'à mi-flancs (équateurs) du bandage pneumatique, voire au-delà. La couche auto-obturante 11 est recouverte radialement intérieurement par une couche de protection 12.

La couche de protection 12 est un film thermoplastique constitué d'un copolymère à blocs rigides et à blocs souples répondant à la formule -(BR-BS)ₙ-, tel qu'un co-poly(éther-bloc-amide) (PEBA). A titre d'exemple, un tel film peut être un film de 20 micromètres d'épaisseur réalisé à partir de la matière première PEBAX^{®} MP1878 de la société ARKEMA. Ce film thermoplastique présente une contrainte d'extension uniaxiale à 100 % de déformation rapportée à la section initiale de 7,7 MPa. Pour un film d'épaisseur 20 µm, cela donne une raideur d'extension à 100 % de l'ordre de 1,6 N/cm de film ; ainsi le film ne s'oppose pratiquement pas à la conformation du bandage pneumatique. Il présente aussi une température de fusion des blocs polyamides de l'ordre de 195 °C qui lui permet de garder son intégrité physique et d'assurer sa fonction pour les températures atteintes lors de la vulcanisation d'un bandage pneumatique. Enfin, son allongement rupture en extension uniaxiale et température ambiante est largement supérieur à 300 %.

La couche de protection 12 permet d'éviter à la couche auto-obturante tout contact avec le tambour de fabrication du bandage pneumatique puis avec la membrane de cuisson du moule de vulcanisation.

Selon un mode de réalisation, la couche auto-obturante 11 comporte un élastomère thermoplastique styrénique (dit « TPS ») et plus de 200 pce d'une huile d'extension de l'élastomère. Les élastomères thermoplastiques styréniques sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

L'élastomère TPS est choisi dans le groupe constitué par les copolymères blocs styrène/ butadiène/ styrène (SBS), styrène/ isoprène/ styrène (SIS), styrène/ isoprène/butadiène/ styrène (SIBS), styrène/ éthylène/ butylène/ styrène (SEBS), styrène/éthylène/ propylène/ styrène (SEPS), styrène/ éthylène/ éthylène/ propylène/ styrène (SEEPS) et les mélanges de ces copolymères.

Plus préférentiellement, l'élastomère est choisi dans le groupe constitué par les copolymères SEBS, les copolymères SEPS et les mélanges de ces copolymères.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Des exemples de telles couches auto-obturantes et de leurs propriétés sont divulgués dans les documents FR 2 910 382, FR 2 910 478 et FR 2 925 388.

Une telle couche auto-obturante peut être préformée par extrusion d'un profilé plat aux dimensions appropriées pour son application sur un tambour de fabrication. Un exemple de réalisation est présenté dans le document FR 2 925 388.

Selon un autre exemple de réalisation, la couche auto-obturante 11 est constituée d'une composition élastomère comportant au moins, à titre d'élastomère majoritaire (préférentiellement pour plus de 50 pce), un élastomère diénique insaturé, entre 30 et 90 pce d'une résine hydrocarbonée et un plastifiant liquide de Tg inférieure à -20°C, à un taux compris entre 0 et 60 pce (pce signifiant parties en poids pour cent parties d'élastomère solide). Elle a pour autre caractéristique essentielle d'être dépourvue de charge ou, tout au plus, d'en comporter moins de 30 pce.

Par élastomère ou caoutchouc "diénique", on rappelle que doit être compris, de manière connue, un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories, saturés ou insaturés. On entend dans la présente demande par élastomère diénique "insaturé" (ou "essentiellement insaturé") un élastomère diénique issu au moins en partie de monomères diènes conjugués et ayant un taux de motifs ou unités issus de diènes conjugués qui est supérieur à 30% (% en moles) ; c'est ainsi que sont exclus de cette définition des élastomères diéniques tels que les caoutchoucs butyl ou les copolymères de diènes et d'alpha-oléfines type EPDM qui peuvent être qualifiés d'élastomères diéniques "saturés" ou "essentiellement saturés" en raison de leur taux réduit de motifs d'origine diénique (toujours inférieur à 15% en moles).

On utilise préférentiellement un élastomère diénique insaturé dont le taux (% en moles) de motifs d'origine diénique (diènes conjugués) est supérieur à 50%, un tel élastomère diénique étant plus préférentiellement choisi dans le groupe constitué par les polybutadiènes (BR), le caoutchouc naturel (NR), les polyisoprènes de synthèse (IR), les copolymères de butadiènes (par exemple de butadiène-styrène ou SBR), les copolymères d'isoprène (bien entendu, autres que caoutchouc butyl) et les mélanges de tels élastomères.

Par opposition à des élastomères diéniques du type liquide, l'élastomère diénique insaturé de la composition est par définition solide. De préférence, sa masse moléculaire moyenne en nombre (Mn) est comprise entre 100 000 et 5 000 000, plus préférentiellement entre 200 000 et 4 000 000 g/mol. La valeur Mn est déterminée de manière connue, par exemple par SEC : solvant tétrahydrofurane ; température 35°C; concentration 1 g/l ; débit 1 ml/min ; solution filtrée sur filtre de porosité 0,45 µm avant injection ; étalonnage de Moore avec des étalons (polyisoprène) ; jeu de 4 colonnes "WATERS" en série ("STYRAGEL" HMW7, HMW6E, et 2 HT6E) ; détection par réfractomètre différentiel ("WATERS 2410") et son logiciel d'exploitation associé ("WATERS EMPOWER").

Plus préférentiellement, l'élastomère diénique insaturé de la composition de la couche auto-obturante est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les copolymères de butadiène-isoprène (BIR), les copolymères de styrène-isoprène (SIR), les copolymères de styrène-butadiène-isoprène (SBIR) et les mélanges de ces élastomères.

Cet élastomère isoprénique est de préférence du caoutchouc naturel ou un polyisoprène cis-1,4 de synthèse; parmi ces polyisoprènes de synthèse, sont utilisés préférentiellement des polyisoprènes ayant un taux (% molaire) de liaisons cis-1,4 supérieur à 90%, plus préférentiellement encore supérieur à 95%, notamment supérieur à 98%.

L'élastomère diénique insaturé ci-dessus, notamment élastomère isoprénique tel que caoutchouc naturel, peut constituer la totalité de la matrice élastomère ou la majorité pondérale (de préférence pour plus de 50%, plus préférentiellement pour plus de 70%) de cette dernière lorsqu'elle comporte un ou plusieurs autre(s) élastomère(s), diéniques ou non diéniques, par exemple du type thermoplastiques. En d'autres termes et de préférence, dans la composition, le taux d'élastomère diénique insaturé (solide), notamment d'élastomère isoprénique tel que caoutchouc naturel, est supérieur à 50 pce, plus préférentiellement supérieur à 70 pce. Plus préférentiellement encore, ce taux d'élastomère diénique insaturé, notamment d'élastomère isoprénique tel que caoutchouc naturel, est supérieur à 80 pce.

Selon un mode de réalisation particulier, l'élastomère diénique insaturé ci-dessus, notamment lorsqu'il s'agit d'un élastomère diénique isoprénique tel que du caoutchouc naturel, est le seul élastomère présent dans la composition auto-obturante. Mais il pourrait aussi, selon d'autres modes de réalisation possibles, être associé à d'autres élastomères (solides) minoritaires en poids, qu'il s'agisse d'élastomères diéniques insaturés (par exemple BR ou SBR) voire saturés (par exemple butyl), ou encore d'élastomères autres que diéniques, par exemple des élastomères thermoplastiques styréniques (TPS), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/styrène (SEPS), styrène/ éthylène/ éthylène/ propylène/ styrène (SEEPS) et les mélanges de ces copolymères.

De manière surprenante, cet élastomère diénique insaturé, non chargé (ou très faiblement chargé), s'est révélé capable, après ajout d'une résine hydrocarbonée thermoplastique dans le domaine étroit préconisé, de remplir la fonction d'une composition auto-obturante performante, comme cela est expliqué en détail dans la suite de l'exposé.

Le deuxième constituant essentiel de la composition auto-obturante est une résine hydrocarbonée.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"Hydrocarbon Resins"* de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods").* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

Leur température de transition vitreuse (Tg) est préférentiellement supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*,* température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à la valeur de Tg.

Dans la composition de la couche auto-obturante, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 60°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de la couche auto-obturante, la résine hydrocarbonée présente au moins une (quelconque), plus préférentiellement l'ensemble des caractéristiques suivantes :
- une Tg supérieure à 25°C ;
- un point de ramollissement supérieur à 50°C (en particulier compris entre 50°C et 135°C) ;
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine hydrocarbonée présente au moins une (quelconque), plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

La Tg est mesurée selon la norme ASTM D3418 (1999). Le point de ramollissement est mesuré selon la norme ISO 4625 (méthode "Ring and Ball"). La macrostructure (Mw, Mn et Ip) est déterminée par chromatographie d'exclusion stérique (SEC): solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5 et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'orthométhylstyrène, le méta-méthylstyrène, le para-méthylstyrène, le vinyle-toluène, le paratertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac" ou par Kolon sous dénomination "Hikorez" pour ce qui concerne les résines coupe C₅/ styrène ou résines coupe C₅/ coupe C₉, ou encore par la société Struktol sous dénomination "40 MS" ou "40 NS" ou par la société Exxon Mobil sous dénomination "Escorez" (mélanges de résines aromatiques et/ou aliphatiques).

La composition auto-obturante a pour caractéristique essentielle de comporter en outre, à un taux inférieur à 60 pce (en d'autres termes entre 0 et 60 pce), un agent plastifiant liquide (à 23°C) dit "à basse Tg" dont la fonction est notamment de ramollir la matrice en diluant l'élastomère diénique et la résine hydrocarbonée, améliorant en particulier les performances d'auto-obturation "à froid" (c'est-à-dire typiquement pour une température inférieure à 0°C) ; sa Tg est par définition inférieure à -20°C, elle est de préférence inférieure à -40°C.

Tout élastomère liquide, toute huile d'extension, qu'elle soit de nature aromatique ou non-aromatique, plus généralement tout agent plastifiant liquide connu pour ses propriétés plastifiantes vis-à-vis d'élastomères, notamment diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines hydrocarbonées qui sont par nature solides à température ambiante.

Conviennent notamment des élastomères liquides à faible masse moléculaire moyenne en nombre (Mn), typiquement comprise entre 300 et 90 000, plus généralement entre 400 et 50 000, par exemple sous la forme de caoutchouc naturel dépolymérisé, de BR, SBR ou IR liquides, tels que décrits par exemple dans les documents brevet US 4 913 209, US 5 085 942 et US 5 295 525. Peuvent être également utilisés des mélanges de tels élastomères liquides avec des huiles telles que décrites ci-après.

Conviennent également des huiles d'extension, notamment celles choisies dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité, hydrogénées ou non), les huiles aromatiques ou DAE (*Distillate Aromatic Extracts*)*,* les huiles MES (*Medium Extracted Solvates*)*,* les huiles TDAE (*Treated Distillate Aromatic Extracts),* les huiles minérales, les huiles végétales (et leurs oligomères, e.g. huiles de colza, soja, tournesol) et les mélanges de ces huiles.

Selon un mode de réalisation particulier, on utilise par exemple une huile du type polybutène, en particulier une huile polyisobutylène (en abrégé "PIB"), qui a démontré un excellent compromis de propriétés comparativement aux autres huiles testées, notamment à une huile conventionnelle du type paraffinique. A titre d'exemples, des huiles PIB sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51".

Conviennent également, à titre de plastifiants liquides, des plastifiants éthers, esters, phosphates, sulfonates, plus particulièrement ceux choisis parmi esters et phosphates. A titre de plastifiants phosphates préférentiels, on peut citer ceux qui contiennent entre 12 et 30 atomes de carbone, par exemple le trioctyle phosphate. A titre de plastifiants esters préférentiels, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en C₁₈, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

La masse moléculaire moyenne en nombre (Mn) du plastifiant liquide est préférentiellement comprise entre 400 et 25 000 g/mol, plus préférentiellement encore comprise entre 800 et 10 000 g/mol. Pour des masses Mn trop basses, il existe un risque de migration du plastifiant à l'extérieur de la composition, tandis que des masses trop élevées peuvent entraîner une rigidification excessive de cette composition. Une masse Mn comprise entre 1 000 et 4 000 g/mol s'est avérée constituer un excellent compromis pour les applications visées, en particulier pour une utilisation dans un bandage pneumatique.

La masse moléculaire moyenne en nombre (Mn) du plastifiant peut être déterminée de manière connue, notamment par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses moléculaires moyennes calculées sont relatives à une courbe d'étalonnage réalisée avec des étalons de polystyrène.

En résumé, le plastifiant liquide est préférentiellement choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés. Plus préférentiellement, ce plastifiant liquide est choisi dans le groupe constitué par les élastomères liquides, les huiles polyoléfiniques, les huiles végétales et les mélanges de ces composés.

L'homme du métier saura, à la lumière de la description et des exemples de réalisation qui suivent, ajuster la quantité de plastifiant liquide en fonction des conditions particulières d'usage de la composition auto-obturante, notamment du bandage pneumatique dans lequel elle est destinée à être utilisée.

De préférence, le taux de plastifiant liquide est compris dans un domaine de 5 à 40 pce, plus préférentiellement dans un domaine de 10 à 30 pce. En dessous des minima indiqués, la composition élastomère risque de présenter une rigidité trop forte pour certaines applications tandis qu'au-delà des maxima préconisés, on s'expose à un risque de cohésion insuffisante de la composition et de propriétés auto-obturantes dégradées.

La composition de la couche auto-obturante a pour caractéristique essentielle d'être non chargée ou très faiblement chargée, c'est-à-dire de comporter de 0 à moins de 30 pce de charge.

Par charge, on entend ici tout type de charge, qu'elle soit renforçante (typiquement à particules nanométriques, de taille moyenne en poids préférentiellement inférieure à 500 nm, notamment entre 20 et 200 nm) ou qu'elle soit non-renforçante ou inerte (typiquement à particules micrométriques, de taille moyenne en poids supérieure à 1 µm, par exemple entre 2 et 200 µm).

Ces charges, renforçantes ou pas, sont essentiellement là que pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère isoprénique tel que du caoutchouc naturel.

Une quantité trop élevée, notamment supérieure à 30 pce ne permet plus d'atteindre les propriétés minimales requises de souplesse, de déformabilité et d'aptitude au fluage. Pour ces raisons, la composition comporte préférentiellement 0 à moins de 20 pce, plus préférentiellement 0 à moins de 10 pce de charge.

A titre d'exemples de charges connues comme renforçantes par l'homme du métier, on citera notamment des nanoparticules de noir de carbone ou d'une charge inorganique renforçante, ou un coupage de ces deux types de charge.

Comme noirs de carbone, par exemple, conviennent tous les noirs de carbone, notamment les noirs du type HAF, ISAF, SAF, GPF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme charges inorganiques renforçantes conviennent notamment des charges minérales du type silice (SiO₂), notamment les silice précipitées ou pyrogénées présentant une surface BET inférieure à 450 m²/g, de préférence de 30 à 400 m²/g.

A titre d'exemples de charges connues comme non-renforçantes ou inertes par l'homme du métier, on citera notamment des microparticules de carbonates de calcium naturels (craie) ou synthétiques, de silicates synthétiques ou naturels (tels que kaolin, talc, mica), de silices broyées, d'oxydes de titane, d'alumines ou encore d'aluminosilicates. A titre d'exemples de charges lamellaires, on peut citer également des particules de graphite. Des charges colorantes ou colorées pourront être avantageusement utilisées pour colorer la composition selon la couleur désirée.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

L'homme de l'art saura, à la lumière de la présente description, ajuster la formulation de la composition auto-obturante afin d'atteindre les niveaux de propriétés souhaités et adapter la formulation à l'application spécifique envisagée.

Selon un mode de réalisation particulier et avantageux, si une charge renforçante est présente dans la composition auto-obturante, son taux est préférentiellement inférieur à 5 pce (soit compris entre 0 et 5 pce), en particulier inférieur à 2 pce (soit compris entre 0 et 2 pce). De tels taux se sont avérés particulièrement favorables au procédé de fabrication de la composition, tout en offrant à cette dernière d'excellentes performances auto-obturantes. On utilise plus préférentiellement un taux compris entre 0,5 et 2 pce, en particulier lorsqu'il s'agit de noir de carbone.

Les constituants de base de la couche auto-obturante précédemment décrits, à savoir élastomère diénique insaturé, résine plastifiante hydrocarbonée, plastifiant liquide et charge optionnelle sont suffisants à eux seuls pour que la composition auto-obturante remplisse totalement sa fonction anti-crevaison vis-à-vis des bandages pneumatiques dans lesquels elle est utilisée.

Toutefois, divers autres additifs peuvent être ajoutés, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition auto-obturante. Selon l'application visée, des fibres, sous forme de fibres courtes ou de pulpe, pourraient être éventuellement ajoutées pour donner plus de cohésion à la composition auto-obturante.

Selon un mode de réalisation préférentiel, la composition auto-obturante comporte en outre un système de réticulation de l'élastomère diénique insaturé. Ce système de réticulation est préférentiellement un système de réticulation à base de soufre, en d'autres termes un système dit "de vulcanisation".

Le système de vulcanisation à base de soufre comporte de préférence, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG.

Dans ce système de vulcanisation, pour une performance d'auto-obturation optimale, le taux de soufre est de préférence compris entre 0,1 et 1,5 pce, en particulier entre 0,2 et 1,2 pce (par exemple entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Ledit système ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce. Si un tel accélérateur est utilisé, on peut citer comme exemple tout composé (accélérateur dit primaire ou secondaire) susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Selon un autre mode de réalisation avantageux, le système de vulcanisation ci-dessus peut être dépourvu de zinc ou d'oxyde de zinc (connus comme activateurs de vulcanisation).

Selon un autre mode de réalisation possible de la couche auto-obturante, on peut aussi utiliser un donneur de soufre en lieu et place du soufre lui-même ; les donneurs de soufre sont bien connus de l'homme du métier. Typiquement, la quantité d'un tel donneur de soufre sera de préférence ajustée entre 0,5 et 10 pce, plus préférentiellement entre 1 et 5 pce, de manière à atteindre les taux de soufre équivalents préférentiels indiqués précédemment.

Après cuisson, un système de vulcanisation tel que décrit ci-dessus apporte une cohésion suffisante à la composition, sans lui conférer une vulcanisation véritable : la réticulation mesurable, via une méthode de gonflement classique connue de l'homme du métier, avoisine en fait le seuil de détection.

Outre les élastomères précédemment décrits, la composition auto-obturante pourrait aussi comporter, toujours selon une fraction pondérale minoritaire par rapport à l'élastomère diénique insaturé, des polymères autres que des élastomères, tels que par exemple des polymères thermoplastiques compatibles avec l'élastomère diénique insaturé.

La composition de la couche auto-obturante précédemment décrite peut être fabriquée par tout moyen approprié, par exemple par mélangeage et/ou malaxage dans des mélangeurs à palette ou à cylindres, jusqu'à obtention d'un mélange intime et homogène de ses différents composants.

Toutefois, le problème de fabrication suivant peut se poser : en l'absence de charge, ou tout au moins d'une quantité notable de charge, la composition est faiblement cohésive. Ce manque de cohésion peut être tel que le pouvoir collant de la composition, dû par ailleurs à la présence d'un taux relativement élevé de résine hydrocarbonée, n'est pas compensé et l'emporte ; il s'ensuit alors un risque de collage parasite sur les outils de mélangeage, qui peut être rédhibitoire dans des conditions de mise en oeuvre industrielle.

Pour pallier les problèmes ci-dessus, la composition auto-obturante, lorsqu'elle comporte un système de vulcanisation, peut être préparée selon un procédé comportant les étapes suivantes :
a) on fabrique dans un premier temps un masterbatch comportant au moins l'élastomère diénique insaturé et entre 30 et 90 pce de la résine hydrocarbonée, en mélangeant ces différents composants dans un mélangeur, à une température ou jusqu'à une température dite "température de mélangeage à chaud" ou "première température" qui est supérieure à la température de ramollissement de la résine hydrocarbonée ;
b) puis on incorpore audit masterbatch au moins le système de réticulation, en mélangeant le tout, dans le même mélangeur ou dans un mélangeur différent, à une température ou jusqu'à une température dite "seconde température" qui est maintenue inférieure à 100°C, pour l'obtention de ladite composition auto-obturante.

Les première et seconde températures ci-dessus sont bien entendu celles du masterbatch et de la composition auto-obturante, respectivement, mesurables in situ et non pas les températures de consigne des mélangeurs eux-mêmes.

Par "masterbatch" (ou "mélange-maître") doit être entendu ici, par définition, le mélange d'au moins l'élastomère diénique et de la résine hydrocarbonée, mélange précurseur de la composition auto-obturante finale, prête à l'emploi.

Le plastifiant liquide peut être incorporé à tout moment, en tout ou partie, notamment au cours de la fabrication du masterbatch lui-même (dans ce cas, avant, pendant ou après incorporation de la résine hydrocarbonée dans l'élastomère diénique), "à chaud" (c'est-à-dire à température supérieure à la température de ramollissement de la résine) comme à une température plus basse, ou par exemple après la fabrication du masterbatch (dans ce cas, avant, pendant ou après ajout du système de réticulation).

Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch.

Un tel procédé s'est avéré particulièrement bien adapté à la fabrication rapide, dans des conditions de mise en oeuvre acceptables du point de vue industriel, d'une composition auto-obturante performante, cette composition pouvant comporter des taux élevés de résine hydrocarbonée sans nécessiter notamment l'emploi d'un plastifiant liquide à un taux particulièrement élevé.

C'est au cours de l'étape a) de mélangeage à chaud que l'élastomère diénique est mis au contact de la résine hydrocarbonée pour fabrication du masterbatch. A l'état initial, c'est-à-dire avant son contact avec l'élastomère, la résine peut se présenter à l'état solide ou à l'état liquide. De préférence, pour un meilleur mélangeage, l'élastomère diénique solide est mis au contact de la résine hydrocarbonée à l'état liquide. Il suffit pour cela de chauffer la résine à une température supérieure à sa température de ramollissement. Selon le type de résine hydrocarbonée utilisée, la température de mélangeage à chaud est typiquement supérieure à 70°C, le plus souvent supérieure à 90°C, par exemple comprise entre 100°C et 150°C.

On préfère introduire, au moins en partie, le plastifiant liquide au cours de l'étape a) de fabrication du masterbatch lui-même, plus préférentiellement dans ce cas soit en même temps que la résine hydrocarbonée, soit après introduction de cette dernière. Selon un mode de réalisation particulièrement avantageux, un mélange de la résine hydrocarbonée et du plastifiant liquide pourra être préparé préalablement à l'incorporation dans l'élastomère diénique.

L'étape b) d'incorporation du système de réticulation est conduite à une température préférentiellement inférieure à 80°C, par ailleurs inférieure préférentiellement à la température de ramollissement de la résine. Ainsi, selon le type de résine hydrocarbonée utilisée, la température de mélangeage de l'étape b) est préférentiellement inférieure à 50°C, plus préférentiellement comprise entre 20°C et 40°C.

Entre les étapes a) et b) ci-dessus peut être intercalée, si nécessaire, une étape intermédiaire de refroidissement du masterbatch afin d'amener sa température à une valeur inférieure à 100°C, préférentiellement inférieure à 80°C, notamment inférieure à la température de ramollissement de la résine, ceci avant introduction (étape b)) du système de réticulation dans le masterbatch précédemment préparé.

Lorsqu'une charge telle que du noir de carbone est utilisée, elle peut être introduite au cours de l'étape a) c'est-à-dire en même temps que l'élastomère diénique insaturé et la résine hydrocarbonée, ou bien au cours de l'étape b) c'est-à-dire en même temps que le système de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

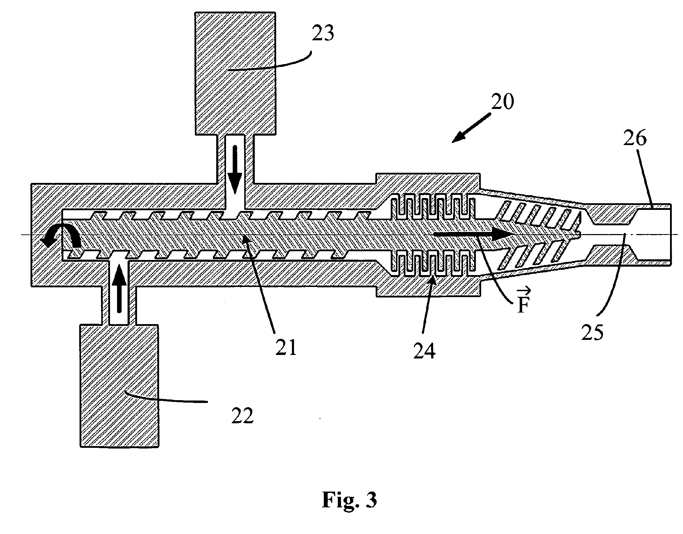

L'étape a) de fabrication du masterbatch est réalisée de préférence dans un mélangeur-extrudeur à vis tel que schématisé par exemple de manière simple à la figure 3.

On voit sur cette figure 3 un mélangeur-extrudeur à vis 20 comportant essentiellement une vis (par exemple une mono-vis) d'extrusion 21, une première pompe de dosage 22 pour l'élastomère diénique (solide) et au moins une deuxième pompe de dosage 23 pour la résine (solide ou liquide) et le plastifiant liquide. La résine hydrocarbonée et le plastifiant liquide peuvent être introduits par exemple au moyen d'une pompe de dosage unique, s'ils ont déjà été mélangés préalablement, ou bien être introduits séparément au moyen d'une deuxième pompe et troisième pompe (troisième pompe non représentée sur la figure 3, pour simplification), respectivement. Les pompes de dosages 22, 23 permettent de monter en pression tout en conservant la maîtrise du dosage et les caractéristiques initiales des matériaux, la dissociation des fonctions de dosages (élastomère, résine et plastifiant liquide) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie 24 dite "hacheur-homogénéisateur", zone à la sortie de laquelle le masterbatch final 25 ainsi obtenu, progressant dans le sens de la flèche F, est finalement extrudé à travers une filière 26 permettant d'extruder le produit aux dimensions souhaitées.

Le masterbatch ainsi extrudé, prêt à être utilisé, est ensuite transféré et refroidi par exemple sur un mélangeur externe à cylindres pour introduction du système de réticulation et de la charge optionnelle, la température à l'intérieur dudit mélangeur externe étant maintenue inférieure à 100°C, de préférence inférieure à 80°C, et par ailleurs étant préférentiellement inférieure à la température de ramollissement de la résine. Avantageusement, les cylindres ci-dessus sont refroidis, par exemple par circulation d'eau, à une température inférieure à 40°C, de préférence inférieure à 30°C, de manière à éviter tout collage parasite de la composition sur les parois du mélangeur.

Il est possible de mettre directement en forme le masterbatch en sortie du dispositif d'extrusion 20 pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de la couche auto-obturante dans des conditions industrielles satisfaisantes, sans risque de pollution des outils due à un collage parasite de la composition sur les parois des mélangeurs.

La couche étanche 10 (d'épaisseur 0,7 à 0,8 mm) dans un mode de réalisation particulier est à base de caoutchouc butyl et présente une formulation conventionnelle pour une « gomme intérieure » ("inner liner") qui définit usuellement, dans un bandage pneumatique conventionnel, la face radialement intérieure du bandage destinée à protéger l'armature de carcasse de la diffusion d'air provenant de l'espace intérieur au bandage pneumatique. Cette couche 10 étanche à l'air permet donc le gonflement et le maintien sous pression du bandage pneumatique 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

Le bandage pneumatique de la figure 1 peut être fabriqué, comme l'indique la figure 2, en intégrant une couche auto-obturante 11 dans une ébauche non vulcanisée de bandage pneumatique 1 en utilisant un tambour de fabrication et les autres techniques usuelles dans la fabrication des bandages pneumatiques. Plus précisément, la couche de protection 12 disposée radialement le plus à l'intérieur est appliquée en premier sur le tambour de fabrication 15. Cette couche de protection 12 peut être enroulée tout autour du tambour de fabrication 15 puis soudée. On peut aussi mettre en place un manchon de protection soudé au préalable. On applique ensuite, successivement, tous les autres composants usuels du bandage pneumatique.

En faisant référence à la figure 2, la couche auto-obturante 11 est disposée directement sur la couche de protection 12. Cette couche a été au préalable pré-formée par toute technique connue, par exemple extrusion ou calandrage. Son épaisseur est préférentiellement supérieure à 0,3 mm, plus préférentiellement comprise entre 0,5 et 10 mm (en particulier pour des bandages pneumatiques de véhicules de tourisme entre 1 et 5 mm). La couche étanche 10 est alors mise en place sur la couche auto-obturante, suivie par la nappe carcasse 8.

Dans un procédé de fabrication deux temps, l'ébauche de bandage pneumatique est alors conformée pour prendre la forme d'un tore. La couche de protection 12 constituée d'une composition à base d'un film PEBA a une rigidité suffisamment faible, une extensibilité uniaxiale et biaxiale suffisantes et est suffisamment liée à la surface de la couche auto-obturante en raison du collant de celle-ci pour suivre les mouvements de l'ébauche de bandage pneumatique sans se décoller ni se déchirer.

Après la conformation, les nappes sommet et la bande de roulement sont mises en place sur l'ébauche du bandage pneumatique. L'ébauche ainsi achevée est placée dans un moule de cuisson et est vulcanisée. Pendant la vulcanisation, la couche de protection protège la membrane de cuisson du moule de tout contact avec la couche auto-obturante.

A la sortie du moule de cuisson, la couche de protection 12 reste attachée à la couche auto-obturante 11. Cette couche de protection ne comporte aucune fissure ni déchirure et se décolle sans aucune difficulté de la membrane de cuisson.

Le bandage pneumatique de la figure 1 peut aussi être fabriqué en utilisant un noyau rigide imposant la forme de la cavité intérieure du bandage. Dans ce procédé, on applique alors en premier la couche de protection sur la surface du noyau, puis l'ensemble des autres constituants du bandage pneumatique. L'application sur le noyau est réalisée dans l'ordre requis par l'architecture finale. Les constituants du bandage pneumatique sont disposés directement à leur place finale, sans subir de conformation à aucun moment de la confection. Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchouteuses. Le pneumatique peut être moulé et vulcanisé comme exposé dans le brevet US 4 895 692. La présence de la couche de protection permet, comme dans le cas de la membrane de cuisson, de séparer aisément le bandage pneumatique du noyau à l'issue de la phase de vulcanisation.

La couche auto-obturante 11 présentée à la figure 1 correspond au second mode de réalisation décrit précédemment. Cette couche est constituée d'une composition auto-obturante comportant les trois constituants essentiels que sont du caoutchouc naturel (100 pce), environ 50 pce de résine hydrocarbonée ("Escorez 2101" de la société Exxon Mobil - point de ramollissement égal à environ 90°C) et environ 15 pce de polybutadiène liquide ("Ricon 154" de la société Sartomer Cray Valley - Mn égale à 5200 environ); elle comporte en outre une très faible quantité (1 pce) de noir de carbone (N772).

La composition auto-obturante ci-dessus a été préparée à l'aide d'une extrudeuse mono-vis (L/D = 40) telle que schématisée à la figure 3 (déjà commentée précédemment) ; le mélange des trois constituants de base (NR, résine et plastifiant liquide) a été réalisé à une température (comprise entre 100 et 130°C) supérieure à la température de ramollissement de la résine. L'extrudeuse utilisée comportait deux alimentations (trémies) différentes (NR d'une part, résine et plastifiant liquide d'autre part préalablement mélangés à un température de 130 à 140°C environ) et une pompe d'injection liquide sous pression pour le mélange résine/ plastifiant liquide (injecté à une température de 100 à 110°C environ) ; quand l'élastomère, la résine et le plastifiant liquide sont ainsi intimement mélangés, on a constaté que le pouvoir collant parasite de la composition diminuait de manière très significative.

Des résultats similaires ont été obtenus en utilisant comme couche auto-obturante une composition comportant un élastomère thermoplastique styrénique TPS, telle que précédemment décrite.

L'extrudeuse ci-dessus était pourvue d'une filière permettant d'extruder le masterbatch aux dimensions voulues vers un mélangeur externe à cylindres, pour incorporation finale des autres constituants, à savoir le système de vulcanisation à base de soufre (par exemple 0,5 ou 1,2 pce) et DPG (par exemple 0,3 pce) et du noir de carbone (à un taux de 1 pce), à basse température maintenue à une valeur inférieure à +30°C (refroidissement des cylindres par circulation d'eau).

La couche auto-obturante 11, disposée donc entre la couche étanche 10 et la cavité du pneumatique, permet de procurer au pneumatique une protection efficace contre les pertes de pression dues aux perforations accidentelles, en permettant l'obturation automatique de ces perforations.

Si un corps étranger tel qu'un clou traverse la structure du bandage pneumatique, par exemple une paroi telle qu'un flanc 3 ou le sommet 6 du bandage pneumatique 1, la composition servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante permettait de supporter sans problème les efforts des parois environnantes, même lors des phases de déformations du bandage pneumatique chargé et en roulage.

Un problème particulier peut être rencontré lors du retrait du corps étranger après un roulage plus ou moins long. Dans un tel cas, lors du roulage, le clou ou corps étranger est soumis à de fortes contraintes ce qui élargit la taille de la fissure initiale dans la paroi du bandage pneumatique. En conséquence, lorsque le retrait du corps étranger est effectif, le matériau de la couche auto-obturante, poussé par la pression de gonflage du bandage pneumatique, peut traverser toute la paroi du bandage pneumatique pour former une saillie ou bouchon à l'extérieur. Ce bouchon obture usuellement de façon satisfaisante la fuite mais il est très exposé à l'extérieur du bandage pneumatique et son arrachement est susceptible d'entraîner une mise à plat progressive ou instantanée du bandage pneumatique. Une autre conséquence de la formation d'un bouchon est de diminuer la quantité de matériau de cette couche auto-obturante à l'intérieur du bandage pneumatique, cela nuit à l'efficacité de cette couche.

Lorsqu'un film thermoplastique, tel ceux comportant un PEBA, est placé sur la surface de la couche auto-obturante du côté de la cavité interne du bandage pneumatique, ce film thermoplastique renforce mécaniquement la couche auto-obturante et favorise le confinement du matériau auto-obturant à l'intérieur de la paroi du bandage pneumatique. La fissure n'est alors pas entièrement traversée par le matériau de la couche auto-obturante et il n'y pas de formation de bouchon à l'extérieur. La très faible rigidité en extension de ces film de protection leur permet d'envelopper les corps étrangers perforants sans diminuer l'efficacité de la couche auto-obturante. On observe ainsi une véritable synergie entre la couche auto-obturante et le film de protection comportant du PEBA.

Lors d'essais, des bandages pneumatiques de type tourisme, de dimension 205/55 R16 (marque Michelin, "Energy 3") ont été testés. Ces bandages pneumatique intègrent comme précédemment décrit une couche auto-obturante 11 recouverte par un film de protection comportant du PEBA 12. La couche auto-obturante a une épaisseur de 3 mm.

Sur un des bandages pneumatiques monté et gonflé, huit perforations de 5 mm de diamètre ont été réalisées, à travers la bande de roulement et le bloc sommet d'une part, les flancs d'autre part, à l'aide de poinçons qui ont été immédiatement retirés.

De manière inattendue, ce bandage a résisté à un roulage sur volant à 150 km/h, sous une charge nominale de 400 kg, sans perte de pression pendant plus de 1 500 km, distance au-delà de laquelle le roulage a été stoppé.

Sur un autre bandage pneumatique, on a procédé de la même façon en laissant cette fois en place les objets perforants, pendant une semaine. Le même excellent résultat a été obtenu.

Sans composition auto-obturante et dans les mêmes conditions que ci-dessus, le bandage pneumatique ainsi perforé perd sa pression en moins d'une minute, devenant totalement inapte au roulage.

On a conduit d'autres part des tests d'endurance sur des bandages pneumatiques conformes à l'invention, identiques aux précédents, mais ayant roulé 750 km, jusqu'à une vitesse de 150 km/h, en laissant cette fois en place les poinçons dans leurs perforations. Après extraction des poinçons (ou expulsion de ces derniers suite au roulage), ces bandages pneumatiques de l'invention ont résisté au roulage sur volant sans perte de pression, dans les mêmes conditions que précédemment (distance parcourue de 1 500 km à une vitesse de 150 km/h et sous une charge nominale de 400 kg).

L'invention n'est pas limitée aux exemples décrits et représentés et diverses modifications peuvent y être apportées sans sortir de son cadre défini par les revendications annexées.

## Revendications

1. Bandage pneumatique avec couche auto-obturante (11) incorporée comportant une bande de roulement caoutchouteuse (9) extérieure, un renfort de carcasse (7), une couche étanche aux gaz (10) disposée intérieurement relativement au renfort de carcasse, une couche de protection (12) disposée le plus intérieurement et une couche auto-obturante (11) adjacente à la couche de protection et disposée intérieurement relativement à la couche étanche aux gaz, **caractérisé en ce que** ladite couche de protection (12) est constituée par un film thermoplastique comportant, à titre de polymère majoritaire, un copolymère à blocs rigides et à blocs souples répondant à la formule :
-(BR-BS)ₙ-
où :
- BR représente un bloc rigide composé d'un polyamide ou d'un mélange de polyamides ;
- BS représente un bloc souple composé d'un polyéther, d'un mélange de polyéthers ou d'un copolymère polyéther-polyester ; et
- n représente le nombre d'unités (BR-BS) dudit copolymère à blocs.

2. Bandage pneumatique selon la revendication 1, dans lequel les blocs rigides du copolymère -(BR-BS)ₙ- sont choisis dans le groupe des polyamide 6, polyamide 11, polyamide 12, polyamide 4-6, polyamide 6-6, polyamide 6-10, polyamide 6-11, polyamide 6-12, polyamide 11-12 et leurs mélanges.

3. Bandage pneumatique selon la revendication 2, dans lequel les blocs rigides du copolymère -(BR-BS)ₙ- sont choisis dans le groupe des polyamide 6, polyamide 6-6, polyamide 11, polyamide 12 et leurs mélanges.

4. Bandage pneumatique selon l'une des revendications 1 à 3, dans lequel le copolymère -(BR-BS)ₙ- est tel que la masse moléculaire moyenne en nombre du bloc rigide BR est comprise entre 200 et 12 000 g/mol et préférentiellement entre 400 et 8 000 g/mol.

5. Bandage pneumatique selon l'une des revendications 1 à 4, dans lequel le copolymère -(BR-BS)ₙ- est tel que la masse moléculaire moyenne en nombre du bloc souple BS est comprise entre 100 et 8 000 g/mol et préférentiellement entre 200 et 6 000 g/mol.

6. Bandage pneumatique selon l'une des revendications 1 à 5, dans lequel le copolymère -(BR-BS)ₙ- est tel que sa masse moléculaire moyenne en nombre est comprise entre 600 et 20 000 g/mol et préférentiellement entre 800 et 14 000 g/mol.

7. Bandage pneumatique selon l'une quelconque des revendications précédentes, dans lequel le copolymère à blocs rigides et à blocs souples est un co-poly(éther-bloc-amide).

8. Bandage pneumatique selon l'une quelconque des revendications précédentes, dans lequel le film thermoplastique de protection comprend en outre des additifs choisis dans le groupe des agents plastifiants, des huiles d'extension, des charges, des agents de protection, des agents de mise en oeuvre et leurs mélanges.

9. Bandage pneumatique selon l'une quelconque des revendications précédentes, dans lequel le copolymère -(BR-BS)ₙ- est le seul polymère constituant le film thermoplastique de protection.

10. Bandage pneumatique selon l'une quelconque des revendications précédentes, dans lequel la contrainte rapportée à la section initiale d'extension à 100 % de déformation uniaxiale et température ambiante est inférieure à 20 MPa.

11. Bandage pneumatique selon l'une quelconque des revendications précédentes, dans lequel l'allongement rupture en extension uniaxiale et température ambiante du film thermoplastique est supérieur à 150 %.

12. Bandage pneumatique selon l'une quelconque des revendications précédentes, dans lequel la température de ramollissement du film de protection est supérieure à 170°C.

13. Bandage pneumatique selon l'une quelconque des revendications précédentes, tel que l'épaisseur du film thermoplastique de protection est comprise entre 5 et 50 micromètres.

14. Bandage pneumatique selon l'une quelconque des revendications précédentes, dans lequel la couche auto-obturante comporte au moins, pce signifiant parties en poids pour cent parties d'élastomère, un élastomère thermoplastique styrénique, dit « TPS », et plus de 200 pce d'une huile d'extension dudit élastomère.

15. Bandage pneumatique selon l'une quelconque des revendications 1 à 13, dans lequel la couche auto-obturante comporte au moins, pce signifiant parties en poids pour cent parties d'élastomère solide :
(a) à titre d'élastomère majoritaire, un élastomère diénique insaturé ;
(b) entre 30 et 90 pce d'une résine hydrocarbonée ;
(c) un plastifiant liquide dont la température de transition vitreuse Tg est inférieure à -20°C, à un taux pondéral compris entre 0 et 60 pce ; et
(d) de 0 à moins de 30 pce d'une charge.

## Patentansprüche

1. Luftreifen mit eingebauter selbstversiegelnder Schicht (11), umfassend eine äußere kautschukartige Lauffläche (9), eine Karkassenverstärkung (7), eine gasdichte Schicht (10), die bezüglich der Karkassenverstärkung innen angeordnet ist, eine Schutzschicht (12), die ganz innen angeordnet ist, und eine selbstversiegelnde Schicht (11), die der Schutzschicht benachbart ist und bezüglich der gasdichten Schicht innen angeordnet ist, **dadurch gekennzeichnet, dass** die Schutzschicht (12) aus einem thermoplastischen Film besteht, der als Hauptpolymer ein Copolymer mit harten Blöcken und weichen Blöcken der Formel:
-(BR-BS)ₙ-,
wobei:
- BR für einen harten Block aus einem Polyamid oder einer Mischung von Polyamiden steht;
- BS für einen weichen Block aus einem Polyether, einer Mischung von Polyethern oder einem Polyether-Polyester-Copolymer steht; und
- n für die Zahl der (BR-BS)-Einheiten des Blockcopolymers steht;
umfasst.

2. Luftreifen nach Anspruch 1, wobei die harten Blöcke des -(BR-BS)ₙ-Copolymers aus der Gruppe Polyamid-6, Polyamid-11, Polyamid-12, Polyamid-4,6, Polyamid-6,6, Polyamid-6,10, Polyamid-6,11, Polyamid-6,12, Polyamid-11,12 und Mischungen davon ausgewählt sind.

3. Luftreifen nach Anspruch 2, wobei die harten Blöcke des -(BR-BS)ₙ-Copolymers aus der Gruppe Polyamid-6, Polyamid-6,6, Polyamid-11, Polyamid-12 und Mischungen davon ausgewählt sind.

4. Luftreifen nach einem der Ansprüche 1 bis 3, wobei das -(BR-BS)ₙ-Copolymer so beschaffen ist, dass die zahlenmittlere Molmasse des harten Blocks BR zwischen 200 und 12.000 g/mol und vorzugsweise zwischen 400 und 8000 g/mol liegt.

5. Luftreifen nach einem der Ansprüche 1 bis 4, wobei das -(BR-BS)ₙ-Copolymer so beschaffen ist, dass die zahlenmittlere Molmasse des weichen Blocks BS zwischen 100 und 8000 g/mol und vorzugsweise zwischen 200 und 6000 g/mol liegt.

6. Luftreifen nach einem der Ansprüche 1 bis 5, wobei das -(BR-BS)ₙ-Copolymer so beschaffen ist, dass seine zahlenmittlere Molmasse zwischen 600 und 20.000 g/mol und vorzugsweise zwischen 800 und 14.000 g/mol liegt.

7. Luftreifen nach einem der vorhergehenden Ansprüche, wobei es sich bei dem Copolymer mit harten Blöcken und weichen Blöcken um ein Poly(ether-block-amid)-Copolymer handelt.

8. Luftreifen nach einem der vorhergehenden Ansprüche, wobei der thermoplastische Schutzfilm außerdem Additive aus der Gruppe Weichmacher, Strecköle, Füllstoffe, Schutzmittel, Verarbeitungshilfsmittel und Mischungen davon umfasst.

9. Luftreifen nach einem der vorhergehenden Ansprüche, wobei das -(BR-BS)ₙ-Copolymer das einzige Polymer ist, aus dem der thermoplastische Schutzfilm aufgebaut ist.

10. Luftreifen nach einem der vorhergehenden Ansprüche, wobei die auf den Anfangsquerschnitt bezogene Dehnspannung bei 100% uniaxialer Verformung und Umgebungstemperatur weniger als 20 MPa beträgt.

11. Luftreifen nach einem der vorhergehenden Ansprüche, wobei die Bruchdehnung des thermoplastischen Schutzfilms bei uniaxialer Dehnung und Umgebungstemperatur mehr als 150% beträgt.

12. Luftreifen nach einem der vorhergehenden Ansprüche, wobei die Erweichungstemperatur des Schutzfilms mehr als 170°C beträgt.

13. Luftreifen nach einem der vorhergehenden Ansprüche, wobei die Dicke des thermoplastischen Schutzfilms zwischen 5 und 50 Mikrometer liegt.

14. Luftreifen nach einem der vorhergehenden Ansprüche, wobei die selbstversiegelnde Schicht mindestens ein thermoplastisches Styrolelastomer, das als TPS-Elastomer bezeichnet wird, und mehr als 200 phe eines Strecköls für das Elastomer umfasst, wobei phe Gewichtsteile pro hundert Teile Elastomer bedeutet.

15. Luftreifen nach einem der Ansprüche 1 bis 13, wobei die selbstversiegelnde Schicht mindestens
(a) als Hauptelastomer ein Elastomer auf Basis von ungesättigtem Dien;
(b) zwischen 30 und 90 phe eines Kohlenwasserstoffharzes;
(c) einen flüssigen Weichmacher, dessen Glasübergangstemperatur Tg weniger als -20°C beträgt, in einem Gewichtsanteil zwischen 0 und 60 phe; und
(d) 0 bis weniger als 30 phe eines Füllstoffs umfasst, wobei phe Gewichtsteile pro hundert Teile festes Elastomer bedeutet.

## Claims

1. Pneumatic tyre with built-in self-sealing layer (11) comprising an outer rubbery tread (9), a carcass reinforcement (7), a gastight layer (10) positioned on the inside relative to the carcass reinforcement, a protective layer (12) positioned innermost and a self-sealing layer (11) adjacent to the protective layer and positioned on the inside relative to the gastight layer, **characterized in that** said protective layer (12) is constituted by a thermoplastic film comprising, as predominant polymer, a copolymer containing hard blocks and soft blocks corresponding to the formula:
-(BR-BS)ₙ-
where:
- BR represents a hard block composed of a polyamide or of a blend of polyamides;
- BS represents a soft block composed of a polyether, a blend of polyethers or a polyether/polyester copolymer; and
- n represents the number of (BR-BS) units of said block copolymer.

2. Pneumatic tyre according to Claim 1, in which the hard blocks of the -(BR-BS)ₙ- copolymer are chosen from the group of polyamide 6, polyamide 11, polyamide 12, polyamide 4,6, polyamide 6,6, polyamide 6,10, polyamide 6,11, polyamide 6,12, polyamide 11,12 and mixtures thereof.

3. Pneumatic tyre according to Claim 2, in which the hard blocks of the -(BR-BS)ₙ- copolymer are chosen from the group of polyamide 6, polyamide 6,6, polyamide 11, polyamide 12 and mixtures thereof.

4. Pneumatic tyre according to one of Claims 1 to 3, in which the -(BR-BS)ₙ-copolymer is such that the number-average molecular weight of the hard block BR is between 200 and 12 000 g/mol and preferably between 400 and 8000 g/mol.

5. Pneumatic tyre according to one of Claims 1 to 4, in which the -(BR-BS)ₙ-copolymer is such that the number-average molecular weight of the soft block BS is between 100 and 8000 g/mol and preferably between 200 and 6000 g/mol.

6. Pneumatic tyre according to one of Claims 1 to 5, in which the -(BR-BS)ₙ-copolymer is such that its number-average molecular weight is between 600 and 20 000 g/mol and preferably between 800 and 14 000 g/mol.

7. Pneumatic tyre according to any one of the preceding claims, in which the copolymer containing hard blocks and soft blocks is a poly(ether-block-amide) copolymer.

8. Pneumatic tyre according to any one of the preceding claims, in which the protective thermoplastic film also comprises additives chosen from the group of plasticizing agents, extender oils, fillers, protective agents, processing aids and mixtures thereof.

9. Pneumatic tyre according to any one of the preceding claims, in which the - (BR-BS)n- copolymer is the only polymer constituting the protective thermoplastic film.

10. Pneumatic tyre according to any one of the preceding claims, in which the stress relative to the initial cross section in extension at 100% uniaxial strain and at ambient temperature is less than 20 MPa.

11. Pneumatic tyre according to any one of the preceding claims, in which the elongation at break in uniaxial extension and at ambient temperature of the thermoplastic film is greater than 150%.

12. Pneumatic tyre according to any one of the preceding claims, in which the softening point of the protective film is greater than 170°C.

13. Pneumatic tyre according to any one of the preceding claims, such that the thickness of the protective thermoplastic film is between 5 and 50 micrometres.

14. Pneumatic tyre according to any one of the preceding claims, in which the self-sealing layer comprises at least, phr signifying parts by weight per 100 parts of elastomer, one thermoplastic styrene elastomer, said TPS, and more than 200 phr of an extender oil of said elastomer.

15. Pneumatic tyre according to any one of Claims 1 to 13, in which the self-sealing layer comprises at least, phr signifying parts by weight per 100 parts of solid elastomer:
(a) as predominant elastomer, an unsaturated diene elastomer;
(b) between 30 and 90 phr of a hydrocarbon resin;
(c) a liquid plasticizer, the glass transition temperature, Tg, of which is below -20°C, at a weight content between 0 and 60 phr; and
(d) from 0 to less than 30 phr of a filler.
